# EUROPEAN PATENT SPECIFICATION

(11) **EP 0 475 342 B1**
(45) Date of publication and mention of the grant of the patent: **23.07.1997**
(21) Application number: 91115254.4
(22) Date of filing: 10.09.1991
(51) Int. Cl.: B60M 1/18

(54) **Constant current non-bridging section insulator**
Einen Gleichstrom nicht übertragenden Streckentrenner
Sectionneur non-portant un courant continu

(30) Priority: 13.09.1990 US 581780
(43) Date of publication of application: 18.03.1992
(73) Proprietor: White, Paul F., Wellesley, Ma. (US)
(72) Inventor: White, Paul F., Wellesley, Ma. (US)
(74) Representative: Tiemann, Ulrich, Dr. Ing.

(56) References cited:
- AT-B- 170 462
- AT-B- 324 417
- AT-B- 377 483
- DE-C- 882 250
- US-A- 3 833 820
- SOVIET INVENTIONS ILLUSTRATED, P,Q section, week 8816, June 1, 1988, Q 14 DERWENT PUBLICATIONS LTD., London
- SOVIET INVENTIONS ILLUSTRATED, P,Q section, week 8747, January 13, 1988, Q14 DERWENT PUBLICATIONS LTD., London

## Description

### BACKGROUND OF THE INVENTION

### Field of the Invention

This invention relates to a method and structure for insulating separate power circuits of overhead electrical contact lines used by light rail vehicles and the like and more particularly relates to a structure which prevents arcing between such power circuits as the vehicle's current collector passes along such lines.

### Description of the Prior Art

Electrified light rail vehicles, trolleys, small railroad trains and the like use a pantograph contact, shoe contact or other type of current collector to supply the vehicle with power from a suspended overhead power line. Such overhead lines generally utilize a plurality of separate circuits along their length separated by insulators. The problem of arcing between the circuits in the prior art occurs when the pantograph or other current collector passes from one circuit to another along the overhead power line. Such arcing between the circuits creates significant heat and causes damage to the power lines and to the section insulators between the separate circuits which damage shortens the useful life of the power lines. This arcing problem is especially significant when the traveling pantograph or shoe does not bridge the gap between the two power circuits as it passes across the section insulator. Under normal conditions arcing occurs on the contact wire as the pantograph passes on to the insulator, and pitting will cause a decrease in the cross-sectional area of the wire over time which worn areas must be replaced with pieces of new contact wire on a periodic basis because if not frequently replaced, the contact wire will fail and break.

Structures in the prior art have tried to minimize this arcing effect such as suggested in U.S. Patent 4,320,820 to Elbert for a Section Insulator with Improved Arc Control which discloses a system of changing current paths to redirect magnetic fields to cause the arcs to move in a direction away from the section insulators. Others have approached the problem in a different way. S. H. Short's Multiple Arc Railway System patented in 1892 in U.S. Patent 473,361 sectionalizes a long piece of contact wire fed from one generator into many short sections where each is isolated by a separate fuse which allows sections to remain energized while other sections can be repaired. Problems with this type of structure include service disruption and the necessity of frequent fusible element replacement. Others have approached the problem using diode arrangements and quenching circuits controlled by SCR loops such as U.S. Patent 3,833,820 to Itoh issued 09/03/74 and West German Patent 2841434 to Siei. In Morq, USSR Patent 1303456 it is suggested to divide the overhead system into sections. Another USSR Patent which Applicant believes is the most pertinent of the prior art to the instant invention is No. 1339040 to Lupo. The Lupo patent utilizes contact wire overlaps at anchor locations. The anchor locations are composed of two separate catenaries (contact wire and supporting messengers) which are parallel and overlap a distance so that the pantograph travels along one catenary and then on both (the overlap) and then on to the other catenary. A typical overlap can be from 3 - 30 meters in length depending on the type of line construction and voltage. Insulating links with neutral inserts are attached to the contact wire, and the pantograph passes from the first circuit's contact wire by the first insulating link, by the central insulating link, by the second insulating link, and then onto the second circuit contact wire. During this passage an arc is created when the pantograph passes from the contact wire through the insulating link, and the created arc is deionized in time due to the passage of current through a diode chain. This structure is designed for use on alternating current electric railroads using a catenary support system and requires heavy overlapping-type construction where anchoring locations in such catenary system must have additional poles with support spans and bracket arms with significant extra hardware. The structure cannot be placed at other locations on the line unless a specific overlap anchoring system is first installed. This structure is also subjected to significant electrical wear from half-wave arcing since it diminishes, but does not eliminate, the arcing factor. There is always the possibility of a locomotive or vehicle stopping with its pantograph between contact wire and the insulating link which, if occurring, would cause a continuous electrical arc to be drawn due to the auxiliary loads of the vehicle (heat, light, and compressor) and such arc would continue to burn until the contact wire was broken.

### SUMMARY OF THE INVENTION

It is an object of this invention to provide a structure to insulate separate power circuits from one another on overhead contact lines associated with electrified light rail vehicle systems which systems can include trolleys, streetcars, mine locomotives, trolley buses and the like to prevent arcing from occurring between power circuits as the vehicle's current collector passes along such lines. The current collectors pass freely through and by the structure of this invention with no interruption to the current flow of the vehicle while at the same time not bridging the two power circuits to which the structure of this invention is interconnected.

The structure of this invention is disclosed in independent claim 1. A preferred embodiment of the invention is disclosed in dependent claim 2.

The design of this invention is especially useful for low voltage direct current service in the 3,000 volt or less range with either pantograph or trolley pole/shoe current type collector devices and can be used with light rail vehicles, trolley buses, mine locomotives, or electric railroad direct current locomotives.

The structure of this invention further provides for an easily replaceable wear surface that can be replaced without disturbing the tension in the contact wires and can be suspended with a soft-style parallelogram suspension support system.

### BRIEF DESCRIPTION OF THE DRAWINGS

- Figure 1: illustrates a schematic drawing of the circuitry of this invention.
- Figure 2: illustrates a perspective view of the structure of this invention suspended by a support system.

### DESCRIPTION OF THE PREFERRED EMBODIMENT(S)

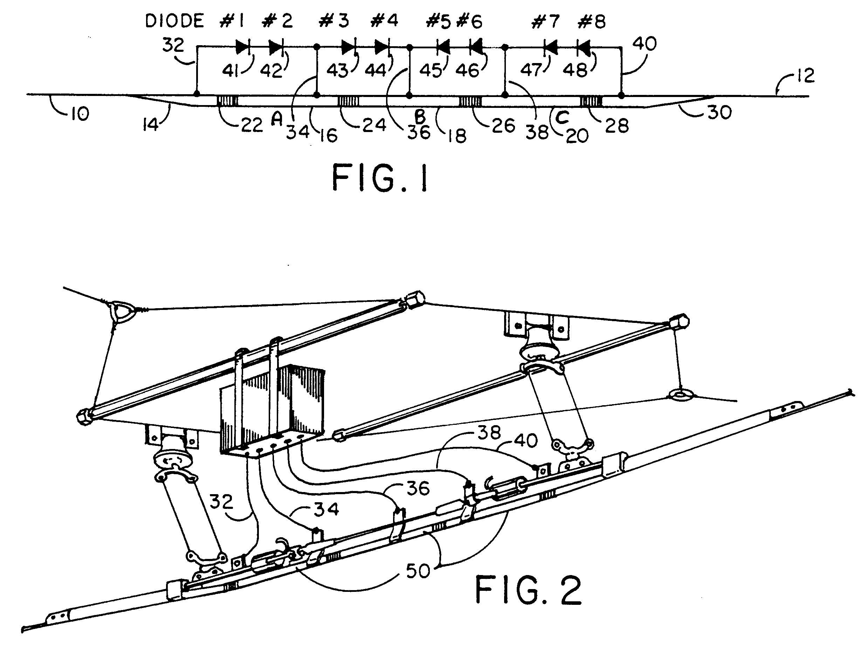

Figure 1 illustrates first circuit 10 separated from a circuit 12 by the structure of this invention. The collector pantograph or shoe travels along first circuit 10 and then travels along entering transition clamp 14 while still receiving current from the first circuit. A series of runners are disposed having insulators therebetween. Runner A 16 is insulated from the transition clamp 14 by insulator 22. Runner B 18 is insulated from runner A 16 by insulation 24 and runner C 20 is insulated from runner B 18 by insulator 26. Runner C 20 extends to the leaving transition clamp 30 which clamp is insulated from runner C 20 by insulating piece 28. Leaving transition clamp 30 extends to second circuit 12. Transition clamps 14 and 30 are energized due to their direct connection to their associated power circuit. The entering transition clamp 14 is bolted or otherwise attached to the contact wire of first circuit 10, and the leaving transition clamp is likewise bolted or attached to the contact wire of second circuit 12. Runners A, B and C are energized by connections to a series of power circuits through jumper cables as will be described below. As the current collector travels from first circuit 10 over the entering transition clamp 14, it passes onto runner A 16 and the power is transmitted from first circuit 10 to the current collector's contact. First jumper cable 32 attached to first circuit 10 which jumper 32 passes the current through first and second diodes 41 and 42, respectively, through second jumper cable 34 to runner A 16. No current can flow from second circuit 12 to main runner A because it is blocked by third and fourth diodes 43 and 44, respectively. Current cannot flow from first circuit 10 into second circuit 12 because it is also blocked by fifth and sixth diodes 45 and 46, respectively. When the current collector is completely on runner A 16 and does not bridge the entering transition clamp 14 or receive current from runner B 18, then all current flows to the current collector from first circuit 10 through first and second diodes 41 and 42, respectively. As the current collector travels onto runner B 18 and still has a portion on runner A 16, the collector receives power from first circuit 10 from second jumper cable 34 through first and second diodes 41 and 42, respectively, and through third jumper cable 36 which receives current from first circuit 10 through the first, second, third and fourth diodes and from second circuit 12 through the fifth, sixth, seventh and eighth diodes 45, 46, 47 and 48, respectively. Due to the blocking nature of the third and fourth diodes indicated by 43 and 44, respectively, the current from second circuit 12 cannot pass into first circuit 10 nor can the current from first circuit 10 pass to second circuit 12 because of the blocking nature of fifth and sixth diodes 45 and 46 preventing any current going in that direction. When the current collector is completely on runner B 18, it receives power from both the first and second circuits as described above. When the current collector passes on to runner C 20 and is still on runner B, it receives power from first circuit 10 through third jumper 36 with current passing through first, second, third and fourth diodes, 41, 42, 43 and 44, respectively, but current from the first circuit 10 cannot flow into second circuit 12 due to the blocking action of seventh and eighth diodes 47 and 48. The current collector also receives power from second circuit 12 through third jumper 36 attached to runner B 18 through fifth and sixth diodes 46 and 45, respectively, directing power to runner C 20 over fourth jumper 38 and through the eighth and seventh diodes 48 and 47, respectively. Current from second circuit 12 cannot flow into first circuit 10 due to the blocking action of fourth and third diodes 44 and 43, respectively. When the current collector is completely on runner C 20 and does not bridge at all on runner B 18 or leaving transition clamp 30, all of the current flowing to the current collector is from second circuit 12 through fourth jumper 38 extending to runner C 20 through the eighth and seventh diodes 48 and 47. The fifth and sixth diodes 45 and 46 prevent current from first circuit 10 from flowing to runner C 20 and the fourth and third diodes 44 and 43 prevent current from second circuit 12 from flowing to first circuit 10. As the current collector travels from runner C 20 onto leaving transition clamp 30, power is transmitted from the contact wire of second circuit 12 and from the fourth jumper cable 38 connected to runner C 20. Current in fourth jumper 38 flows from second circuit 12 through fifth jumper 40 and through eighth and seventh diodes 48 and 47. When the current collector travels off main runner C onto the leaving transition clamp 30 and directly onto second circuit 12, it will receive all of its power from the trolley contact wires of second circuit 12. The arcing and burning of the prior art does not take place because the insulators 22, 24, 26 and 28 between the transition clamps and runners A, B and C are shorter than the length of the conducting strips of the pantograph current collectors or trolley pole/shoe current collectors.

As seen in Figure 2, running/wearing surfaces 50 of runners A, B and C can easily be replaced when worn out without disturbing the tension in the contact wires by simply unbolting the wearing surface from the contact wires and removing it after first disconnecting the jumper cables. The new wearing surface can then be attached to the contact wires with the jumper wires then being reconnected. The suspension system can be attached only to the contact wires and does not have to be disturbed or dismantled during wear surface replacement procedures. Use of the structure of this invention which separates the electrical power circuits on the contact wires while providing insulation allows the current collectors to pass from one contact wire circuit to the adjoining circuit without losing power and without bridging the two power circuits. Electrical arcing that is associated with non-bridging section insulators is thereby avoided which arcing is eliminated due to the insulated conducting runners connected in series through the diode array as described above which arrangement prevents the current from one circuit passing to the other.

This structure of this invention, as discussed above, can be used with direct current overhead contact wire systems with voltages of 3,000 volts or less for electric railroads, light rail systems, trolley bus lines and underground mining operations. In underground mining operations, the structure of this invention is particularly useful because the absence of electrical arcing would help eliminate any explosions of gas which might be caused by such arcing. The structure of this invention can be installed on any type of contact wire system, either catenary or single contact wire. A suspension trapeze, as seen in Figure 2, with the attached parallelogram wires can be utilized for soft suspension. The structure of this invention can also be used in catenary or direct hard suspension systems in locations where contact wire support bars or tube-running surface construction is needed at junctions or turnouts. The structure of this invention can be pre-bent or field-bent for use in curved construction. The diode enclosure can be supported at the trapeze on a catenary messenger or at a cross-span pole; or if utilized in a mine or subway, on the wall or ceiling. The structure of this invention can be placed anywhere in a length of contact wire even if it is under constant tension, and it does not require an overlap to be installed. The structure of this invention further is subjected to much less electrical wear because no arcing will take place and even though it is subject to mechanical wear from the current collectors, the replacement of the separate wear surfaces, not being under tension, is easier. Also, since the runners can be of large cross-sectional area with a high profile, extreme wear can be tolerated before replacement is needed and should the structure wear down to a point where it breaks and fails, only the wearing surface will be affected and the contact wires will remain intact.

In some embodiments an existing cut-in section insulator can be used to provide insulation in the contact wires and the wear surface conducting pieces can be attached under this insulator with the diode array enclosure placed on the existing section insulator support span. This arrangement would allow for the use of the structure at a section break using a non-bridging but arc-creating insulator or bridging insulator which would then become a constant-current non-bridging section insulator without the necessity of adding spanning supports.

## Claims

1. A structure being adapted to be positioned between a first circuit (10) of a first overhead power line and a second circuit (12) of a second overhead power line for an electric powered vehicle having a current collector, comprising means to prevent current from one of said circuits (10, 12) from passing to the other circuit, said means comprising an entering piece being connected to the first circuit (10) and a leaving piece being connected to the second circuit (12) and comprising two conducting runners being separated from the entering piece by a first insulating link, from the leaving piece by a second insulating link and from each other by a third insulating link, the first link being bypassed by a first diode chain, and the second link being bypassed by a last diode chain, which diode chains are connected opposite to each other, characterized in that said means comprises a further conducting runner (18) positioned between said two runners (16, 20) and insulated therefrom and two further diode chains (43, 44; 45, 46) connecting said further runner (18) with said two runners (16, 20) respectively, which diode chains are connected opposite to each other, wherein said diodes (41 to 48) prevent current from either of said circuits (10, 12) from passing to the other of said circuits (10, 12) by the electric current blocking of said diodes (41 to 48); and wherein arcing between said circuits (10, 12) is prevented as said current collector passes from one conducting runner (16, 18, 20) to the next by voltage equalization of said circuits (10, 12) through said further diodes (43 to 46) at said further conducting runner (18) without electrical bridging between said first (10) and second circuits (12).

2. A structure according to claim 1, characterized in that it comprises an entering transition clamp (14) having a first and second end, said first end of said entering transition clamp (14) attached to the contact line of said first circuit (10); a first insulator (22) having a first and second end, said first insulator (22) being of a length shorter than the contact length of said current collector, said first end of said first insulator (22) being attached to the second end of said entering transition clamp (14); a first runner A (16) having a first and second end, said first end being attached to the second end of said first insulator (22), said first runner A (16) being electrically conductive; a second insulator (24) having a first and second end, said first end of said second insulator (24) being attached to the second end of said first runner A (16); a second runner B (18) having a first and second end, said second runner B (18) being electrically conductive, said first end of said second runner B (18) being attached to the second end of said second insulator (24); a third insulator (26) having a first and second end, said third insulator (26) being of a length shorter than the length of said current collector, said first end of said third insulator (26) being attached to the second end of said second runner B (18); a third runner C (20) having a first and second end, said third runner C (20) being electrically conductive, said first end of said third runner C (20) being attached to the second end of said third insulator (26); a fourth insulator (28) having a first and second end, said fourth insulator (28) being of a shorter length than the length of said current collector, said first end of said fourth insulator (28) being attached to the second end of said third runner C (20); a leaving transition clamp (30) having a first and second end, said first end being attached to the second end of said fourth insulator (28) and the second end being attached to the contact line of said second circuit (12); a first jumper (32) having a first and second end, said first end being attached to the contact line of said first circuit (10); a power line extending from the second end of said first jumper (32); a first (41) and second diode (42) positioned on the power line from said first circuit (10), said first (41) and second diodes (42) adapted to allow current to pass from said first circuit (10) through said diodes (41, 42) and to block any current passing in the opposite direction; a second jumper (34) having a first and second end, said first end attached to said power line and positioned on said power line after said first (41) and second diodes (42), the second end of said second jumper (34) being attached to said first runner A (16); a third (43) and fourth diode (44) positioned on said power line after said second jumper (34), said third (43) and fourth diodes (44) being positioned to allow current to pass therethrough from said first circuit (10) but to block any current passing in the opposite direction; a third jumper (36), having a first and second end, said first end attached to said power line at a position after said third (43) and fourth diodes (44) with the second end of said third jumper (36) being attached to said second runner B (18); a fifth (45) and sixth diode (46) positioned on said power line at a position after said third jumper (36), said fifth (45) and sixth diodes (46) positioned to prevent current from passing from said second circuit (12) to said first circuit (10) and to allow current to pass from said power line to said second runner B (18); a fourth jumper (38) having a first and second end, said first end of said fourth jumper (38) attached to said power line at a position after said fifth (45) and sixth diodes (46) with said second end of said fourth jumper (38) being attached to said third runner C (20); a seventh (47) and eight diode (48) on said power line positioned after said fourth jumper (38) adapted to prevent current from passing from said first circuit (10) to said second circuit (12); and that said power line extends after the position of said seventh (47) and eighth diodes (48) to the contact line of said second circuit (12), said structure adapted to receive current from both of said first (10) and second circuits (12) and for said first (41), second (42), third (43) and fourth (44) diodes to prevent current from passing from said second circuit (12) to said first circuit (10) even when said runners (16, 18, 20) are bridged by the electrical contact of said current collector which current collector is adapted to bridge no more than two runners (16, 18, 20) at a time and said fifth (45), sixth (46), seventh (47) and eighth diodes (48) prevent current from passing from said first circuit (10) to said second circuit (12).

## Patentansprüche

1. Gleichstrom nicht übertragender Streckentrenner zwischen einem ersten Stromkreis (10) einer ersten Oberleitung und einem zweiten Stromkreis (12) einer zweiten Oberleitung für ein elektrisch betriebenes Fahrzeug mit einem Stromabnehmer, wobei der Streckentrenner Mittel zur Verhinderung des Stromübertritts von einem der Stromkreise (10, 12) auf den anderen Stromkreis aufweist und wobei diese Mittel ein Eingangsstück, das mit dem ersten Stromkreis (10) und ein Ausgangsstück, das mit dem zweiten Stromkreis (12) verbunden ist, sowie zwei elektrisch leitende Laufschienen, die von dem Eingangsstück durch ein erstes Isolierstück, von dem Ausgangsstück durch ein zweites Isolierstück und voneinander durch ein drittes Isolierstück getrennt sind, aufweisen, wobei das erste Isolierstück durch eine erste Diodenkette und das zweite Isolierstück durch eine letzte Diodenkette, die beide entgegengesetzt zueinander geschaltet sind, überbrückt wird, dadurch gekennzeichnet, daß die Mittel zur Verhinderung des Stromübertritts eine weitere elektrisch leitende Laufschiene (18), die zwischen den beiden elektrisch leitenden Laufschienen (16, 20) und gegen diese isoliert angeordnet ist und zwei weitere, in entgegengesetzter Durchlaßrichtung geschaltete Diodenketten (43, 44; 45, 46), welche die weitere Laufschiene (18) mit den beiden Laufschienen (16, 20) verbindet, aufweisen, wobei die Dioden (41 bis 48) Stromübertritt von einem der beiden Stromkreise (10, 12) zu dem anderen Stromkreis (10, 12) verhindern, indem sie den Stromdurchgang durch diese Dioden (41 bis 48) blockieren und worin Lichtbogenbildung zwischen den Stromkreisen (10, 12) verhindert wird, wenn der Stromabnehmer von einer der elektrisch leitenden Laufschienen (16, 18, 20) zur nächsten übergeht, indem durch die weiteren Dioden (43 bis 46) an der weiteren elektrisch leitenden Laufschiene (18) Spannungsausgleich zwischen den Stromkreisen (10, 12) erfolgt, ohne daß zwischen dem ersten (10) und zweiten Stromkreis (12) eine elektrisch leitende Verbindung entsteht.

2. Streckentrenner gemäß Patentanspruch 1, dadurch gekennzeichnet, daß er eine Eingangs-Endklemme (14) mit einem ersten und einem zweiten Ende, wobei das erste Ende der Eingangs-Endklemme (14) mit dem Kontaktdraht des ersten Stromkreises (10) verbunden ist; einen ersten Isolator (22) mit einem ersten und einem zweiten Ende, wobei der erste Isolator (22) kürzer ist als die Kontaktlänge des Stromabnehmers und wobei das erste Ende des ersten Isolators (22) mit dem zweiten Ende der Eingangs-Endklemme (14) verbunden ist; eine erste elektrisch leitende Laufschiene A (16) mit einem ersten und einem zweiten Ende, wobei das erste Ende mit dem zweiten Ende des ersten Isolators (22) verbunden ist; einen zweiten Isolator (24) mit einem ersten und einem zweiten Ende, wobei das erste Ende des zweiten Isolators (24) mit dem zweiten Ende der ersten Laufschiene A (16) verbunden ist; eine zweite elektrisch leitende Laufschiene B (18) mit einem ersten und einem zweiten Ende, wobei das erste Ende der zweiten Laufschiene B (18) mit dem zweiten Ende des zweiten Isolators (24) verbunden ist; einen dritten Isolator (26) mit einem ersten und einem zweiten Ende, wobei der dritte Isolator kürzer ist als die Kontaktlänge des Stromabnehmers und wobei das erste Ende des dritten Isolators (26) mit dem zweiten Ende der zweiten Laufschiene (18) verbunden ist; eine dritte elektrisch leitende Laufschiene C (20) mit einem ersten und einem zweiten Ende, wobei das erste Ende der dritten Laufschiene C (20) mit dem zweiten Ende des dritten Isolators (26) verbunden ist; einen vierten Isolator (28) mit einem ersten und einem zweiten Ende, wobei der vierte Isolator (28) kürzer ist als die Kontaktlänge des Stromabnehmers und wobei das erste Ende des vierten Isolators (28) mit dem zweiten Ende der dritten Laufschiene verbunden ist; eine Ausgangs-Endklemme (30) mit einem ersten und einem zweiten Ende, wobei das erste Ende mit dem zweiten Ende des vierten Isolators (28) und das zweite Ende mit dem Kontaktdraht des zweiten Stromkreises (12) verbunden ist; eine erste Kurzschlußbrücke (32) mit einem ersten und einem zweiten Ende, wobei das erste Ende mit dem Kontaktdraht des ersten Stromkreises (10) verbunden ist; eine Starkstromleitung, die sich von dem zweiten Ende der ersten Kurzschlußbrücke erstreckt; eine erste (41) und eine zweite Diode (42), die sich auf der Starkstromleitung des ersten Stromkreises (10) befindet, wobei die erste (41) und zweite Diode (42) so eingerichtet sind, daß sie Strom von dem ersten Stromkreis (10) durch die Dioden (41, 42) fließen lassen, daß sie jedoch jeden Strom in der Gegenrichtung blockieren; eine zweite Kurzschlußbrücke (34) mit einem ersten und einem zweiten Ende, wobei das erste Ende mit der Starkstromleitung verbunden ist und sich auf der Starkstromleitung hinter der ersten (41) und zweiten Diode (42) befindet und wobei das zweite Ende der zweiten Kurzschlußbrücke (34) mit der ersten Laufschiene A (16) verbunden ist; eine dritte (43) und vierte Diode (44), die sich auf der Starkstromleitung hinter der zweiten Kurzschlußbrücke (34) befinden, wobei die dritte (43) und vierte Diode (44) so angeordnet sind, daß sie Strom von dem ersten Stromkreis (10) hindurchtreten lassen, daß sie jedoch jeden Strom in der Gegenrichtung blockieren; eine dritte Kurzschlußbrücke (36) mit einem ersten und einem zweiten Ende, wobei das erste Ende mit der Starkstromleitung an einem Punkt hinter der dritten (43) und vierten Diode (44) verbunden ist und wobei das zweite Ende der dritten Kurzschlußbrücke (36) mit der zweiten Laufschiene B (18) verbunden ist; eine fünfte (45) und sechste Diode (46), die sich auf der Starkstromleitung hinter der dritten Kurzschlußbrücke (36) befinden, wobei die fünfte (45) und sechste Diode (46) so angeordnet sind, daß sie verhindern, daß Strom von dem zweiten Stromkreis (12) zu dem ersten Stromkreis (10) fließt, daß sie jedoch Strom von der Starkstromleitung zu der zweiten Laufschiene B (18) hindurchfließen lassen; eine vierte Kurzschlußbrücke (38) mit einem ersten und einem zweiten Ende, wobei das erste Ende der vierten Kurzschlußbrücke (38) mit einem Punkt auf der Starkstromleitung hinter der fünften (45) und sechsten Diode (46) verbunden ist und wobei das zweite Ende der vierten Kurzschlußbrücke (38) mit der dritten Laufschiene C (20) verbunden ist; eine siebte (47) und achte Diode (48), die sich auf der Starkstromleitung hinter der vierten Kurzschlußbrücke (38) befinden, und die so angeordnet sind, daß sie verhindern, daß Strom von dem ersten Stromkreis (10) zu dem zweiten Stromkreis (12) fließt, aufweist;
und wobei sich die Starkstromleitung hinter der siebten (47) und achten Diode (48) zu dem Kontaktdraht des zweiten Stromkreises (12) erstreckt; und wobei der Streckentrenner so ausgebildet ist, daß er Strom sowohl vom ersten (10) als auch vom zweiten Stromkreis (12) erhält und die erste (41), zweite (42), dritte und vierte Diode (44) so ausgebildet sind, daß sie verhindern, daß Strom von dem zweiten Stromkreis (12) zu dem ersten Stromkreis (10) fließt, selbst wenn die Laufschienen (16, 18, 20) durch den elektrischen Kontakt des Stromabnehmers, der so ausgebildet ist, daß er nie mehr als zwei Laufschienen (16, 18, 20) gleichzeitig überbrückt, und wobei die fünfte (45), sechste (46), siebte (47) und achte Diode (48) so ausgebildet sind, daß sie verhindern, daß Strom von dem ersten Stromkreis (10) zu dem zweiten Stromkreis (12) fließt.

## Revendications

1. Un sectionneur non-portant un courant continu entre la première boucle de courant (10) d'une première ligne éléctrique et une deuxième boucle de courant (12) d'une deuxième ligne éléctrique pour un véhicule éléctrique avec pantographe, où le sectionneur contient des moyens qui servent à empêcher que le courant passe d'une boucle de courant (10, 12) à l'autre et où ces moyens une pièce d'entrée, qui est avec la boucle de courant (10) et une pièce de sortie, laquelle est reliée avec la deuxième boucle de courant (12), ainsi que deux glissières qui conduisent du courant, qui sont séparées de la partie d'entré par un premier isolateur et de la partie de sortie par un deuxième isolateur et entre-eux séparé par un troisième isolateur, où le premier isolateur est ponté par une première chaîne de diodes et le second isolateur par une dernière chaîne de diodes, qui sont connectées une contre l'autre, sont signalé, par le fait que les moyens pour éviter le passage du courant une autre glissière (18) conduisant du courant, laquelle entre les deux Glissières (16, 20) conduisant du courant et contre celles-ci est positionné isolé et deux autres, chaînes de diodes qui sont connectées dans le sens contraire du passage de courant (43, 33, 45, 46), lesquellesconnectent une autre glissière (18) avec les deux glissières (16,20), où les diodes (41 à 48) empêchent un passage de courant d'une boucle de courant (10, 12) à l'autre boucle de courant (10,12), tandis que le passage du courant est bloqué par les diodes (41 à 48) et où un arc entre les deux boucles de courant est empêché, quand le pantographe passe d'une glissière conduisant du courant éléctrique (16, 18, 20) à l'autre, cependant avec des autres diodes (43 à 46) à la continuation de la glissière conduisant du cournat (18) une égalisation de tension entre les boucles de courant (10, 12)est effectué, sans que se produise une connection éléctrique entre la première (10) et la seconde boucle de courant.

2. Le sectionneur selon la prétention de revendication 1, marqué par le fait, qu'une borne d'entrée de transition (14) avec une première et deuxième éxtrémité, où la première éxtrémité de la borne d'entrée de transition (14) est contactée avec le fil de contact de la première boucle de courant (10); un premier isolateur (22) avec une première et deuxième éxtrémité, où le premier isolateur (22) est plus court que la longeur de contact du pentographe et où la première éxtrémité du premier isolateur (22) est connectée avec la deuxième éxtrémité de la borne d'entrée de transition (14); une première glissière A (16) conduisant le courant éléctrique avec une première et deuxième éxtrémité, où la première éxtrémité est connectée avec la deuxième éxtrémité du premier isolateur (22), et un deuxième isolateur (24) avec une première et deuxième éxtrémité, où la première éxtrémité du deuxième isolateur (24) est connectée avec la deuxième éxtrémité de la glissière A (16); une deuxième glissière B (18) conduisant le courant éléctrique avec une première et deuxième éxtrémité, où la première éxtrémité de la deuxième glissière B (18) est connectée avec la deuxième éxtrémité du deuxième isolateur (24); un troisième isolateur (26) avec une première et deuxième éxtrémité, où le troisième isolateur est plus court que la longeur de contacte du pentographe et où la première éxtrémité du troisième isolateur (26) est connectée avec la deuxième éxtrémité de la glissière (18); une troisième glissière C (20) conduisant le courant éléctrique avec une première et deuxième éxtrémité, où la première éxtrémité de la troisième glissière C (20) est connectée avec la deuxième éxtrémité du troisième isolateur (26); un quatrième isolateur (28) avec une première et deuxième éxtrémité, où le quatrième isolateur (28) est plus court que la longeur de contact du pentographe et où la première éxtrémité du quatrième isolateur (28) est connectée avec la deuxième éxtrémité de la glissière; une borne de transition à la sortie (20) avec une première et seconde éxtrémité, où la première éxtrémité avec la deuxième éxtrémité du quatrième isolateur (28) et la deuxième éxtrémité est connectée avec le fil de contact de la deuxième boucle de courant (12); un premier pont de court-circuit (32) avec une première et deuxième éxtrémité, où la première éxtrémité est connectée avec le fil de contact de la première boucle de courant (10); une ligne à haute tension, laquelle s'étend de la deuxième éxtrémité du premier pont de court-circuit; une première (41) et une deuxième diode (42), lesquelles se trouvent sur la ligne à haute tension de la première boucle de courant (10), où la première (41) et une deuxième diode (42) sont disposées de telle façon, qu'elles laissent circuler le courant de la première boucle de courant (10) à travers les diodes (41,42), mais qu'elles bloquent le courant inverse, un deuxième pont de court-circuit (34) avec une première et deuxième éxtrémité, où la première éxtrémité est connecté avec la ligne à haute tension dans un point derrière la première (41) et deuxième diode (42) et où la deuxième éxtrémité du pont de court-circuit (34) est connectée avec la glissière A (16); une troisième (43) et quatrième diode (44), lesquelles se trouvent sur la ligne à haute tension derrière le deuxième pont de court-circuit (34), où la troisième (43) et quatrième diode (44) sont disposées de telle façon, qu'elles laissent circuler le courant provenant de la première boucle de courant (10), mais qu'elles bloquent le courant inverse, un troisième pont de court-circuit (36) avec une première et deuxième éxtrémité, où la première éxtrémité est connectée avec la ligne à haute tension dans un point derrière la troisième (43) et quatrième diode (44) et où la deuxième éxtrémité du troisième pont de court-circuit (36) est connectée avec la deuxième glissière B (18); une cinquième (45) et sixième diode (46), lesquelles se trouvent sur la ligne à haute tension derrière le troisième pont de court-circuit (36), où la cinquième (45) et sixième diode (46) sont placées de telle manière, qu'elles évitent, que le courant puisse circuler de la deuxième boucle de courant (12) à la première boucle de courant, mais elles laissent circuler le courant de la ligne à haute tension vers la glissière B (18); un quatrième pont de court-circuit (38) avec une première et deuxième éxtrémité où la première éxtrémié du quatrième pont de court-circuit (38) est connecté en un point sur la ligne à haute tension derrière la cinquième (45) et sixième diode (46) et où la deuxième éxtrémité du quatrième pont de court-circuit (38) est connectée avec la troisième glissière C (20); une septième (47) et huitième diode (48), lesquelles se trouvent sur la ligne à haute tension derrière le quatrième pont de court-circuit (38), et positionnées de telle manière, quelles empêchent, que le courant puisse circuler de la première boucle de courant (10) à la deuxième boucle de courant (12); et où la ligne à haute tension derrière la septième (47) et huitième diode (48) s'étend vers le fil de contact de la deuxième boucle de courant (12); et où le sectionneur est adapté de telle manière, qu'il reçoit du courant de la première (10) et de la deuxième boucle de courant (12) et la première (41), deuxième (42), troisième (43) et quatrième (44) diode sont placées de telle manière, qu'elles empêchent, que le courant puisse circuler de la deuxième boucle de courant (12) vers la première (10), même si les glissières (16, 18, 20) par le contact éléctrique du pentographe, lequel est construit de la manière, que jamais plus de deux glissières (16, 18, 20) soient pontées au même temps, et où la cinquième (45), la sixième (46), la septième (47) et la huitième diode (48) sont placées de telle manière, qu'elles empêchent, que le courant puisse circuler de la première boucle de courant (10) vers la deuxième boucle de courant (12).
